**Europäisches Patentamt**

**European Patent Office**

**Office européen des brevets**

(19)

(11) Veröffentlichungsnummer : **0 370 058 B1**

(12) **EUROPÄISCHE PATENTSCHRIFT**

(45) Veröffentlichungstag der Patentschrift :
17.06.92 Patentblatt 92/25

(51) Int. Cl.⁵ : **A21C 9/04**

(21) Anmeldenummer : **88907189.0**

(22) Anmeldetag : **28.07.88**

(86) Internationale Anmeldenummer :
**PCT/AT88/00056**

(87) Internationale Veröffentlichungsnummer :
**WO 89/00813 09.02.89 Gazette 89/04**

(54) **VORRICHTUNG ZUM BESTREUEN VON TEIGSTÜCKEN.**

(30) Priorität : **30.07.87 AT 1930/87**

(43) Veröffentlichungstag der Anmeldung :
**30.05.90 Patentblatt 90/22**

(45) Bekanntmachung des Hinweises auf die
Patenterteilung :
**17.06.92 Patentblatt 92/25**

(84) Benannte Vertragsstaaten :
**AT DE GB NL SE**

(56) Entgegenhaltungen :
**DE-A- 2 653 678**
**GB-A- 316 043**
**GB-A- 746 101**
**US-A- 2 995 107**
**US-A- 4 123 213**

(73) Patentinhaber : **KÖNIG, Helmut**
**Statteggerstrasse 80**
**A-8045 Graz (AT)**

(72) Erfinder : **KÖNIG, Helmut**
**Statteggerstrasse 80**
**A-8045 Graz (AT)**

(74) Vertreter : **Wildhack, Helmut, Dipl.-Ing. Dr. et al**
**Patentanwälte Dipl.-Ing. Leo Brauneiss**
**Dipl.-Ing. Dr. Helmut Wildhack Landstrasser**
**Hauptstrasse 50 Postfach 281**
**A-1031 Wien (AT)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 370 058 B1

Jouve, 18, rue Saint-Denis, 75001 PARIS

**Beschreibung**

Die Erfindung bezieht sich auf eine Vorrichtung zum Bestreuen von Teigstücken mit Streugut, z.B. Mohn oder Sesam, mit einer Transportvorrichtung für die Teigstücke, mit welcher die Teigstücke zuerst einer Benetzungsstation und anschließend einer Streustation zugeführt werden, wobei in der Benetzungsstation eine von einer Benetzungsflüssigkeitaufbringevorrichtung, insbesondere zumindest einer Tropfdüse, mit der Benetzungsflüssigkeit, insbesondere Wasser, befeuchtete Benetzungswalze auf der oben liegenden Oberflächenpartie des Teigstückes abrollt und dabei das Wasser auf das Teigstück überträgt, und in der Streustation das Teigstück an einem das Streugut enthaltenden Vorratsbehälter vorbeiläuft, aus welchem das Streugut durch ein bewegtes Streuorgan, insbesondere eine umlaufende Streuwalze oder eine Bürste, auf die Teigstücke aufgebracht wird.

Bekanntlich gibt es zahlreiche Gebäckstücksorten, insbesondere Kleingebäck, die mit Streugut bestreut werden müssen, z.B. mit Mohn, Sesam, Salz usw. Hiezu ist es bekannt, die Teigstücke auf ein Stahlgeflechtband aufzulegen und unterhalb einer Besprühungsvorrichtung durchlaufen zu lassen, welche die Oberfläche der Teigstücke mit einer Benetzungsflüssigkeit, im allgemeinen Wasser besprüht (DE-OS 2.653678). Danach gelangen die Teigstücke unter eine Streuvorrichtung und werden dort mit dem Streugut mittels einer Streuwalze bestreut, wobei die Streumenge durch die Drehzahl dieser Streuwalze einstellbar ist.Jeweils unterhalb der Besprühungsvorrichtung und der Streuvorrichtung befinden sich Auffangbehälter für das überschüssige Wasser bzw. das überschüssige Streugut. Nachteilig hieran ist, daß sich der Sprühnebel der Besprühungsvorrichtung in der ganzen Umgebung der Maschine verbreitet und auch Maschinenteile benetzt, an denen dies nicht erwünscht ist, da diese Maschinenteile dann zu kleben beginnen. Weiters wird das Stahlgeflechtband auch an seiner Unterseite naß, so daß Teigstücke beim Transport durch die Bestreuungsvorrichtung auch an der Unterseite des Transportbandes kleben bleiben können. Die nassen Stahlstäbe des Stahlgeflechtbandes führen auch dazu, daß an der Bestreuungsstelle Teilchen des Streugutes auf dem Stahlgeflechtband hängen bleiben, die dann später auf die Unterseite der Teigstücke übertragen werden, was zumeist unerwünscht ist. Letzterer Nachteil läßt sich dadurch mildern, daß zwei gesonderte Transportsysteme für die Teigstücke verwendet werden, von denen das eine unterhalb der Besprühungsvorrichtung, das andere unterhalb der Streuvorrichtung liegt. Die Nachteile der unerwünschten Benetzung von Maschinenteilen bleiben aber ungelöst. Es ist auch bekannt, die Teigstücke durch ein Wasserbad zu führen, welches die Teigstücke an ihrer Unterseite benetzt. Sodann werden die Teigstücke umgedreht und an der nun oben liegenden benetzten Seite mitdem Streugut bestreut. Dadurch werden die oben erwähnten Nachteile der unerwünschten Benetzung von Maschinenteilen beseitigt, jedoch ist der Grad der Benetzung nicht bestimmbar, da in jedem Fall eine volle Benetzung des Teigstückes erfolgt, da dieses ja voll im Wasser steht. Manche Teigstücksorten vertragen dies nicht gut. Dieser Nachteil gilt auch für eine weitere bekannte Vorrichtung, bei welcher die Teigstücke nicht von oben her bestreut werden, sondern die an der Unterseite mittels eines Wasserbades benetzten Teigstücke mit der feuchten Seite nach unten gekehrt zu einem Gitterband wandern, welches von unten her mittels einer Bürste mit dem Streugut beaufschlagt wird. Ein zusätzlicher Nachteil hiebei besteht aber darin, daß sich durch das Zusammenwirken des Gitterbandes mit der sich darunter drehenden Bürste, die mit einem Abstreifer versehen ist, ein Streugutwulst auf der Oberseite des Gitterbandes oberhalb des Abstreifers aufbaut, welcher dann das benetzte Teigstück durchgehend bedeckt, was einerseits optisch unschön ist und anderseits eine Einstellung der Streugutmenge zunichte macht. Schließlich ist es bekannt, die Benetzungsflüssigkeit auf die Ober fläche des Teigstückes mittels einer Schaumstoffwalze aufzubringen, welche von einer mit der Benetzungsflüssigkeit gespeisten Tropfvorrichtung betropft wird (US-PS 2 995 107). Das Teigstück wandert unter dieser Schaumstoffwalze durch, wobei mittels der Höhenverstellung dieser Walze eine Einstellung der auf das Teigstück übertragenen Be netzungsflüssigkeitsmenge möglich ist. Dies vermeidet die Nachteile des Sprühnebels, hat jedoch den Nachteil, daß die Schaumstoffwalze zuviel Wasser aufnimmt, wenn zwischenzeitlich kein Teigstück unter die Walze gebracht wird, so daß die nach dieser Pause folgenden nächsten Teigstücke zu stark benetzt werden. Weiters kann nicht vermieden werden, daß nach dem Abschalten der Vorrichtung die im Schaumstoff gespeicherte Wassermenge auf das darunterliegende Gitterband abtropft, wodurch nach der Wiederinbetriebnahme Teigstücke auf dem Gitterband kleben bleiben. Schließlich kann der Benetzungsgrad nicht völlig frei bestimmt werden, da die Benetzung vom Maß der Zusammendrückung des Schaumstoffes abhängig ist und das Teigstück bei stärkerem Andrücken in das Gitterband gepreßt wird und sodann an diesem wieder kleben bleibt.

Die Erfindung setzt sich zur Aufgabe, diese Nachteile zu vermeiden und eine Vorrichtung der eingangs geschilderten Art so zu verbessern, daß einerseits eine dosierte Benetzung der für die Benetzung vorgesehenen Oberflächenpartie des Teigstückes möglich ist, ohne daß umliegende Maschinenteile in unerwünschter Weise benetzt werden und daß anderseits ein Festkleben der Teigstücke auf ihrer Unterlage verhindert ist. Die Erfindung löst diese Aufgabe dadurch, daß an jenem Umfangsteil der zur Drehbewegung angetriebenen Benetzungswalze, der vom benetzten Teigstück zur Benetzungsflüssigkeitsaufbringevorrichtung zurückführt, eine Abfuhrvorrichtung, in Form einer Absaugevorrichtung, für überschüssige Benetzungsflüssigkeit angeordnet ist. Diese Abfuhrvorrichtung leitet überschüssige Benetzungsflüssigkeit von der Benetzungswalze ab, so daß das Abtropfen von Benetzungsflüssigkeit zur darunter liegenden Transportvorrichtung für die Teigstücke vermieden ist. Dies hält nicht nur die Transportvorrichtung rein, so daß ein Ankleben der Teigstücke an naßen Teilen der Transportvorrichtung vermieden ist, sondern ermöglicht auch eine genaue Dosierung der aufgebrachten Benetzungsflüssigkeitsmenge. An der nachgeschalteten Streustation kann die Bestreuung in an sich bekannter Weise, etwa mittels einer im Vorratsbehälter für das Streugut umlaufenden Streuwalze oder Bürste erfolgen, so daß eine dosierte Bestreuung der Teigstücke von oben möglich ist, ohne daß die Teigstückunterseite mit Streugut in Berührung gelangt. Da die Abfuhrvorrichtung als Absaugevorrichtung ausgebildet ist, ergibt sich noch ein weiterer Vorteil: Allfällige an der Benetzungzwalze kleben gebliebene Teigteilchen werden von der Benetzungswalze abgesaugt und daher nicht auf die nachfolgenden Teigstücke übertragen.

Gemäß einer bevorzugten Ausführungsform der Erfindung hat die Absaugvorrichtung eine an eine Unterdruckquelle angeschlossene Flachdüse, die sich über zumindest einen Großteil der axialen Länge der Benetzungswalze erstreckt. So kann die Benetzungswalze über ihre gesamte wirksame Länge gleichmäßig von überschüssiger Benetzungsflüssigkeit befreit werden. Zur Unterstützung kann bei der Abfuhrvorrichtung ein an der Benetzungswalze anliegender Abstreifer, insbesondere eine Abstreifleiste vorgesehen sein. Besteht die Benetzungswalze aus zusammendrückbarem Material, z.B. in an sich bekannter Weise aus Schaumstoff, so kann durch diesen Abstreifer, welcher in das Material der Benetzungswalze eindrückt, ein Ausdrückeffekt erzielt werden. In allen Fällen ergibt sich eine verläßliche Abfuhr an der Walze anhaftender Teigstückreste. Die Abstreifleiste kann erfindungsgemäß einen Teil der Wand der Flachdüse bilden, was eine besonders wirksame Absaugung bewirkt. Es ist im Rahmen der Erfindung hiebei zweckmäßig, den Abstand der Absaugevorrichtung von der Benetzungswalze einstellbar zu machen, um den Absaugeeffekt auf die Besonderheiten des vorliegenden Falles einstellen zu können.

Wie bereits erwähnt, ermöglicht es die Erfindung, den Benetzungsgrad durch das Maß der Zusammendrückung einer Schaumstoffwalze od.dgl., über welche die Benetzung erfolgt, einzustellen. Um hiebei bei starkem Andrücken dieser Walze zu vermeiden, daß die Teigstücke in die üblicherweise von einem Stahlgeflechtband gebildete Transportvorrichtung eingedrückt werden, kann im Rahmen der Erfindung unterhalb der Benetzungwalze eine starr gelagerte, zur Drehbewegung angetriebene Gegenwalze als Auflage für das zu benetzende Teigstück vorgesehen sein. Zweckmäßig überbrückt hiebei diese Gegenwalze einen Spalt zwischen zwei Gitterförderbändern. Um eine gute Auflage des Teigstückes zu erzielen, ist diese Gegenwalze verhältnismäßig dick und es beträgt ihr Durchmesser vorzugsweise 70 bis 130 % des Durchmessers der Benetzungswalze.

Es ist weiters im Rahmen der Erfindung zweckmäßig, die Benetzungswalze zusammen mit der Absaugvorrichtung mittels eines Exzenters höhenverstellbar im Gestell der Vorrichtung zu lagern, vorzugsweise an im Gestell schwenkbar gelagerten Armen, um die Benetzung auch auf diese Weise einstellen zu können. Außerdem erleichtert die Höhenverstellung den Ausbau der Benetzungswalze, z.B. zum Zwecke der Reinigung oder des Ersatzes, insbesondere wenn erfindungsgemäß die Benetzungswalze an ihren beiden Enden mit Steckbolzen in den Armen gelagert ist, wobei einer der Steckbolzen ein auf ihn drehfest, jedoch abziehbar aufgestecktes Zahnrad trägt, das in eine Innenverzahlung der Benetzungswalze einschiebbar ist, wobei dieser Steckbolzen mit einem Drehantrieb, z.B. einem Kettentrieb, für die Drehbewegung der Benetzungswalze verbunden ist.

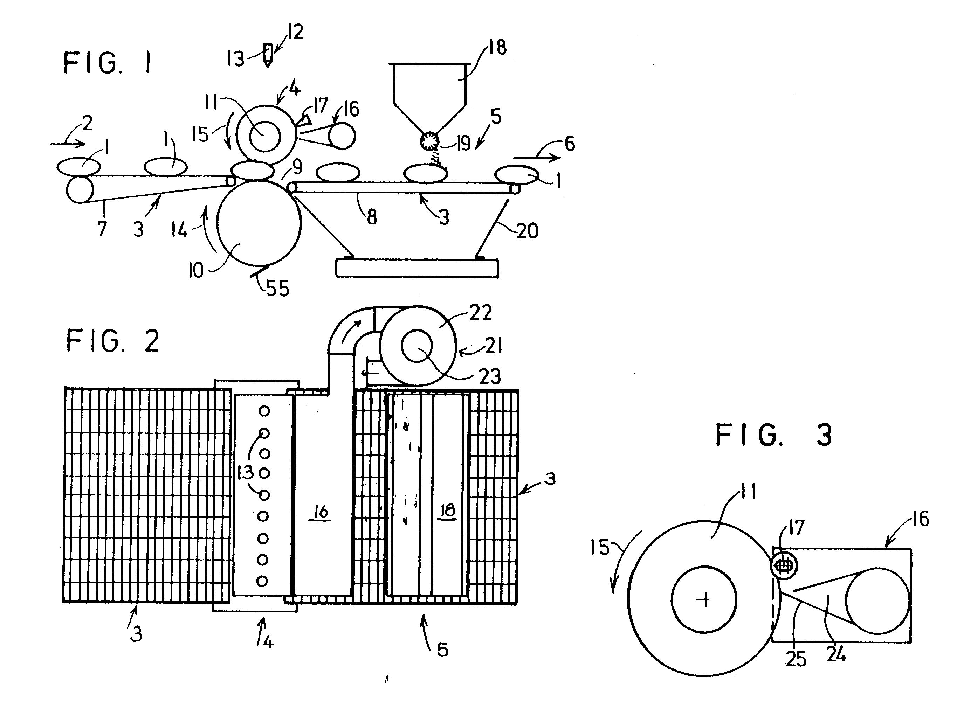

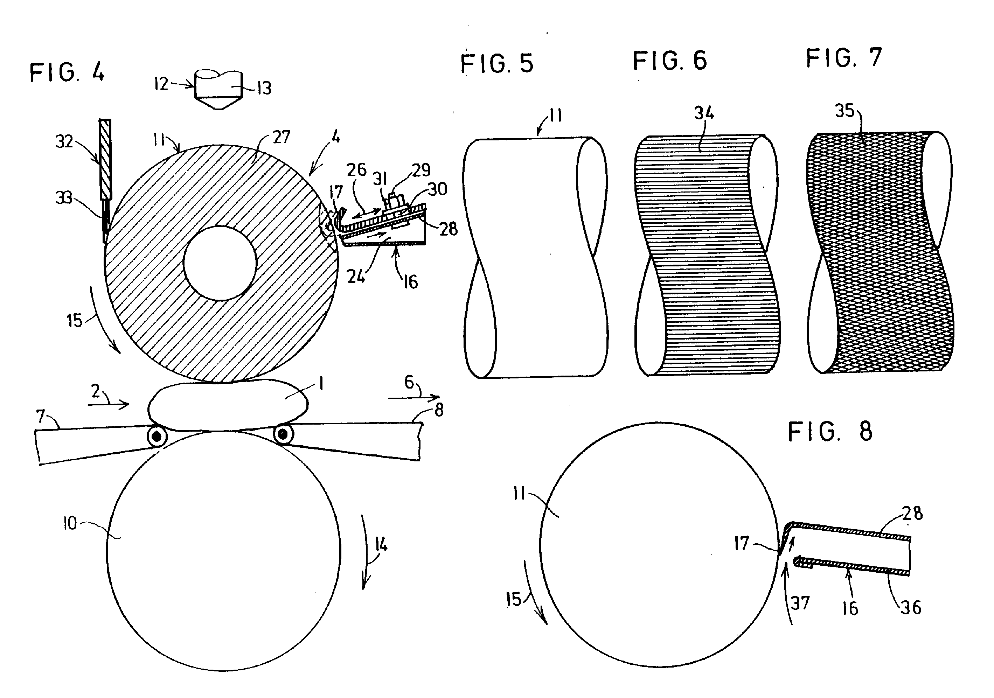

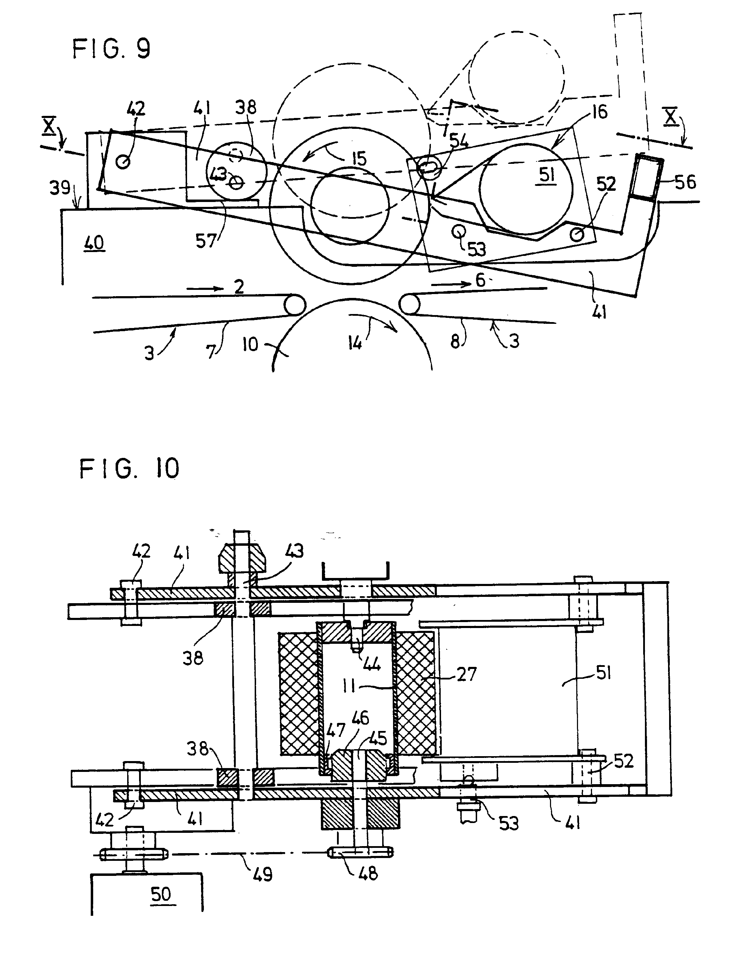

In der Zeichnung ist der Gegenstand der Erfindung anhand von Ausführungsbeispielen schematisch dargestellt. Fig.1 zeigt ein Ausführungsbeispiel der gesamten Vorrichtung in Seitenansicht. Fig.2 ist eine Draufsicht zu Fig.1. Fig.3 zeigt eine abgewandelte Ausführungsform eines Details der Fig.1. Fig.4 ist eine Seitenansicht einer weiteren Ausführungsvariante in größerem Maßstab. Die Figuren 5, 6 und 7 zeigen je einen Ausschnitt aus einer Seitenansicht der Benetzungswalze. Fig.8 zeigt eine weitere Ausführungsvariante im Schnitt ähnlich Fig.4. Fig.9 ist eine Seitenansicht einer höhenverstellbaren Halterung einer Benetzungswalze. Fig.10 ist ein Schnitt nach der Linie X - X der Fig.9.

Bei der Vorrichtung nach den Fig.1 und 2 werden die mit Mohn zu bestreuenden Teigstücke 1 in Richtung des Pfeiles 2 mittels einer Transportvorrichtung 3 zuerst einer Benetzungsstation 4 und dann einer Streustation 5 zugeführt und von dieser in Richtung des Pfeiles 6 wieder abgeführt. Die Transportvorrichtung 3 hat zwei in der gleichen Richtung umlaufende, synchron angetriebene Gitterförderbänder 7,8, deren jedes aus einem Stahlgeflechtband od.dgl. besteht. Die beiden Förderbänder 7,8 liegen voneinander in einem etwa der Länge eines Teigstückes entsprechenden Abstand, so daß zwischen den beiden Förderbändern ein Spalt 9 gebildet wird, der durch eine Gegenwalze.10 überbrückt wird, deren Oberrand etwa auf gleicher Höhe liegt wie die Oberränder der beiden endlosen Förderbänder 7,8. Oberhalb dieser Gegenwalze 10 ist höhenverstellbar eine Benetzungswalze angeordnet, mit welcher eine Benetzungsflüssigkeit, insbesondere Wasser oder Milch, auf die Oberfläche der Teigstücke 1 aufgebracht werden kann. Hiezu ist oberhalb der Benetzungswalze 11 eine nur schematisch angedeutete Benetzungsflüssigkeitsaufbringevorrichtung 12 angeordnet, die mehrere Tropfdüsen 13 aufweist, aus denen die Benetzungsflüssigkeit auf die Benetzungswalze 11 tropft. Die beiden Walzen 10,11 sind zu einer gegensinnigen Bewegung in Richtung der Pfeile 14 bzw. 15 angetrieben, derart, daß die auf das Teigstück 1 einwirkenden Umfangsgeschwindigkeiten der beiden Walzen zumindest annähernd einander gleich sind und zumindest annähernd auch gleich sind der Geschwindigkeit, mit der die Teigstücke 1 vom Förderband 7 angeliefert bzw. vom Förderband 8 abgenommen werden. Die Benetzungswalze 11 kann eine feste bzw. starre Oberfläche, aber auch eine weiche Oberfläche haben, insbesondere aus Schaumstoff. Die beiden Motoren zum Antrieb der Walzen 10,11 sind der besseren Übersichtlichkeit halber nicht darfestellt, gegebenenfalls können beide Walzen auch von einem gemeinsamen Motor aus angetrieben werden. Der Benetzungswalze 11 ist eine Absaugevorrichtung 16 zugeordnet, die die überschüssige Menge an Benetzungsflüssigkeit von der Walze 11 wieder abnimmt. Diese Absaugevorrichtung ist am auflaufenden Teil des Umfanges der Benetzungs walze 11 angeordnet, d.h. an jenem Umfangsteil, der vom benetzten Teigstück 1 zur Benetzungsflüssigkeitsaufbringevorrichtung 12 zurückführt. Im Falle der Verwendung einer zusammendrückbaren Benetzungswalze 11, insbesondere aus Schaumstoff, kann ein Abstreifer 17 im Bereich der Absaugevorrichtung 16 vorgesehen sein, durch welchen einerseits eine Ausdrückung der Benetzungswalze 11 bewirkt wird, anderseits eine Abstreifung von an der Benetzungswalze 11 anhaftenden Teigstückchen erzielt wird, z.B. bei fetthaltigen Teigen. Diese Teigstückchen werden zusammen mit der überschüssigen Benetzungsflüssigkeit von der Absaugevorrichtung 16 sicher abgeführt.

Die unter der Benetzungswalze 11 angeordnete feste Gegenwalze 10 erlaubt eine Zusammendrückung des Teigstückes um das nötige Maß, um die Übertragung der Benetzungsflüssigkeit auf das Teigstück sicher zu gewährleisten, ohne daß die Gefahr besteht, daß das Teigstück 1 in die Maschen eines Gitterförderbandes hineingedrückt wird. Hiezu ist die Oberfläche der Gegenwalze 10 glatt und teigabweisend.

Von der Benetzungsstation 4 gelangen die Teigstücke auf dem Gitterförderband 8 zur Streustation 5, wo sie mit Mohn bestreut werden. Hiezu ist ein Vorratsbehälter 18 für den Mohn vorgesehen, der unten eine Auslauföffnung hat, an der eine zur Drehbewegung angetriebene Streubürste 19 sitzt, mit der die Mohnaufbringung auf die benetzten Teigstücke dosiert erfolgen kann. Unterhalb der Streustation 5 ist ein Auffangtrichter 20 für überschüssigen Mohn angeordnet. Ein analoger Auffangtrichter unterhalb der Benetzungsstation 4 ist nicht erforderlich, da ja das überschüssige Benetzungswasser od.dgl. von der Absaugevorrichtung 16 aufgenommen wird. Hiezu ist diese Vorrichtung 16 an einen Absaugventilator 21 angeschlossen, der einen Flüssigkeitsabscheider 22 hat und von einem Motor 23 aus angetrieben wird.

Die Wassermenge, die von den regulierbaren Tropfdüsen 13 auf die Benetzungswalze 11 tropft, wird von dieser weitertransportiert und vom Teigstück 1 unmittelbar durch Kontakt mit der Benetzungswalze 11 aufgenommen. Das überschüssige Wasser wird von der Absaugevorrichtung 16 und gegebenenfalls auch durch den Abstreifer 17 von der Benetzungswalze 11 abgenommen, zusammen mit allfälligen an dieser Walze anhaftenden Teigresten.

Bei der Ausführungsform nach Fig.3 ist der Abstreifer 17 von einer starren, drehbar gelagerten Walze gebildet, die sich im das nachgiebige Material, vorzugsweise Schaumstoff, der Oberflächenschicht der Benetzungswalze 11 eindrückt und auf diese Weise eine Auspressung dieses Materiales bewirkt. Die Flachdüse 24 der Absaugvorrichtung 16 hat eine untere Begrenzungswand 25, die an der Oberfläche der Benetzungswalze 11 streifend anliegt und derartan der Walze 11 anhaftende Teigteilchen abstreift, so daß diese Teigteilchen durch den Abstreifer 17 nicht in den Schaumstoff der Benetzungswalze 11 eingedrückt werden können. Der Abstreifer 17, der hier also lediglich eine Ausdrückfunktion für das Wasser ausübt, ist mit seiner Achse in horizontaler Richtung verstellbar gelagert, so daß der Druck, mit welchem die den Abstreifer 17 bildende Walze am Schaumstoff der Benetzungswalze 11 anliegt, einstellbar ist.

Bei der Ausführungsform nach Fig.4 ist ein in radialer Richtung der Benetzungswalze 11 in Richtung des Doppelpfeiles 26 verstellbarer Abstreifer 17 vorgesehen, der in den Schaumstoff 27 der Benetzungswalze 11 eindrückend angeordnet werden kann, so daß ein Ausdrückeffekt auf diesen Schaumstoff 27 ausgeübt wird. Hiezu ist an der Deckwand 28 der Flachdüse 24 ein Gewindebolzen 29 befestigt, der einen Längsschlitz 30 eines den Abstreifer 17 bildenden Bleches durchsetzt und auf den eine Mutter 31 aufschraubbar ist, mit welcher der Abstreifer 17 in der eingestellten Lage an der Flachdüse 24 festklemmbar ist. In der mit vollausgezogenen Linien dargestellten Lage des Abstreifers 17 liegt sein der Benetzungswalze 11 zugekehrter, U- bzw. V-förmig abgebogener Rand in Abstand von der Oberfläche der Benetzungswalze 11. Dadurch ergibt sich zwar keine Ausdrückwirkung auf den Schaumstoff 27 der Benetzungswalze 11, wohl aber eine Einstellung des wirksamen Luftspaltes der Flachdüse 24, so daß der Absaugeffekt durch Verstellung des Abstreifers 17 beeinflußbar ist. In der mit strichlierten Linien dargestellten Lage des Abstreifers 17 drückt sein abgebogener Rand in den Schaumstoff 27 ein und übt daher auf diesen Schaumstoff eine Ausdrückwirkung aus.

Insbesondere dann, wenn die Benetzungswalze 11 starr ist, d.h. keine elastisch zusammendrückbare Schaumstoffaulage 27 aufweist, kann es von Vorteil sein, den Tropfdüsen 13 einen Verteiler 32 nachzuschalten, welcher z.B. von einer an der Oberfläche der Benetzungswalze 11 anliegenden Bürste 33 gebildet sein kann. Dadurch wird die aufgetropfte Benetzungsflüssigkeitsmenge gleichmäßiger auf der Benetzungswalze 11 verteilt.

Die Oberfläche der Benetzungswalze 11 kann glatt sein (Fig.5), sie kann aber auch zwecks besserer Aufnahme der Benetzungsflüssigkeit aufgerauht sein, z.B. mittels einer in Achsrichtung der Benetzungswalze verlaufenden Längsriffelung 34 (Fig.6) oder einer Kreuzriffelung 35 (Fig.7).

Fig.4 zeigt, daß die mit starrer, glatter Oberfläche ausgebildete Gegenwalze 10 den Spalt zwischen den beiden Gitterförderbändern 7,8 völlig überbrückt, wobei der Scheitel der Gegenwalze 10 etwa so hochliegt wie das jeweilige Obertrum der beiden Gitterförderbänder 7,8. Auf diese Weise wird ein schonender Transport des Teigstückes 1 unter der Benetzungswalze 11 erzielt.

Bei der Ausführungsform nach Fig.8 sind der Abstreifer 17 und die Absaugevorrichtung 16 zu einem gemeinsamen Bauteil vereinigt. Hiezu ist die Deckwand 28 der Absaugevorrichtung 16 nach unten zu abgebogen und bildet mit der Bodenwand 36 eine nach unten gerichtete Absaugeöffnung, durch welche die angesaugte Luft zusammen mit dem überschüssigen, auf der Oberfläche der Benetzungswalze 11 anhaftenden Wasserfilm in Richtung des Pfeiles 37 eingesaugt wird. Der umgebogene Teil der Deckwand 28 liegt wie eine messerartige Abstreifleiste an der starren Oberfläche der Benetzungswalze 11 an.

Die Figuren 9 und 10 zeigen die Halterung der Benetzungswalze 11. Während die Gegenwalze 10 starr im Maschinengehäuse drehbar gelagert ist, ist die Benetzungswalze mittels eines Exzenters 38 höhenverstellbar im Gestell 39 gelagert. Hiezu hat das Gestell 39 zwei seitliche Wangen 40, an denen Arme 41 umeine horizontale Achse 42 schwenkbar gelagert sind. In den Armen 41 ist der Exzenter 38 mit einer zwei Exzenterscheiben tragenden Welle 43 gelagert, wobei sich die beiden Exzenterscheiben 38 auf einer Anschlagfläche 57 des Gestelles 39 abstützen. In den Armen 41 ist die Benetzungswalze 11, welche einen Ring aus Schaumstoff 27 trägt, mittels zweier Steckbolzen 44,45 drehbar gelagert. Der eine Steckbolzen 45 trägt ein auf ihn drehschlüssig, jedoch abziehbar aufgesetztes Zahnrad 46, das mit einer Innenverzahnung 47 der Benetzungswalze 11 kämmt. Das andere Ende dieses Steckbolzens 45 trägt drehschlüssig ein Kettenrad 48, das über eine Kette 49 mit dem Kettenrad eines Antriebsmotors 50 für die Benetzungswalze 11 verbunden ist.

Die Arme 41 tragen auch das Gehäuse 51 der Absaugevorrichtung 16, welches um eine Achse 52 schwenkbar an den Armen 41 befestigt ist. Die Arme 41 können zur Vergrößerung der Steifigkeit durch ein Querstück 56 zu einem Rahmen verbunden sein, der mittels eines Rastbolzens 53 in der wirksamen Lage festlegbar ist. Dieses Gehäuse 51 trägt auch die Lagerung 54 für den verstellbaren Abstreifer 17 bzw. eine mit dem Schaumstoff 27 zusammenwirkende Ausdrückwalze.

Die Konstruktion ist so beschaffen, daß die Benetzungswalze 11 leicht ausbaubar und über die vom Zahnrad 46 und der Innenverzahnung 47 gebildete Kupplung wieder mit dem Antrieb zusammengebaut werden kann. Die von der Achse 52 gebildete Schwenklagerung für die Absaugevorrichtung 16 kann verstellbar sein, um den wirksamen Luftspalt und damit den Absaugeeffekt einstellen zu können.

Gegebenenfalls kann mit der Gegenwalze 10 ebenfalls ein Abstreifer 55 (Fig.1) zusammenwirken.

Wenngleich die beschriebene Vorrichtung eine Bestreuung der Teigstücke 1 von oben vornimmt, so wäre die Erfindung auch anwendbar auf eine solche Vorrichtung, bei welcher eine Beaufschlagung der Teigstücke mit dem Streugut von unten erfolgt. In letzterem Fall müßten die Teigstücke 1 allerdings vor der Bestreuung gewendet werden, so daß sie mit der benetzten Seite nach unten weisen.

**Patentansprüche**

1. Vorrichtung zum Bestreuen von Teigstücken mit Streugut, z.B. Mohn oder Sesam, mit einer Transportvorrichtung (3) für die Teigstücke (1). mit welcher die Teigstücke (1) zuerst einer Benetzungsstation (4) und anschließend einer Streustation (5) zugeführt werden, wobei in der Benetzungsstation (4) eine von einer Benetzungsflüssigkeitsaufbringevorrcihtung (12), insbesondere zumindest einer Tropfdüse (13), mit der Benetzungsflüssigkeit , insbesondere Wasser, befeuchtete Benetzungswalze (11) auf der oben liegenden Oberflächenpartie des Teigstückes (1) abrollt und dabei das Wasser auf das Teigstück (1) überträgt, und in der Streustation (5) das Teigstück (1) an einem das Streugut enthaltenden Vorratsbehälter (18) vorbeiläuft, aus welchem das Streugut durch ein bewegtes Streuorgan, insbesondere eine umlaufende Streuwalze oder eine Bürste (19), auf die Teigstücke (1) aufgebracht wird, dadurch gekennzeichnet, daß an jenem Umfangsteil der zur Drehbewegung angetriebenen Benetzungswalze (11), der vom benetzten Teigstück (1) zur Benetzungsflüssigkeitsaufbringevorrichtung (12) zurückführt, eine Abfuhrvorrichtung,in Form einer Absaugevorrichtung (16), für überschüssige Benetzungsflüssigkeit angeordnet ist.

2. Vorrichtung nach Anspruch 1, dadurch gekennzeichnet, daß die Absaugevorrichtung (16) eine an eine Unterdruckquelle, insbesondere einen Absaugventilator (21), angeschlossene Flachdüse (24) hat, die sich über zumindest einen Großteil der axialen Länge der Benetzungswalze (11) erstreckt.

3. Vorrichtung nach Anspruch 11 oder 2, dadurch gekennzeichnet, daß bei der Absaugevorrichtung (16) ein an der Benetzungswalze (11) anliegender Abstreifer (17) insbesondere eine Abstreifleiste oder -walze vorgesehen ist.

4. Vorrichtung nach den Ansprüchen 2 und 3, dadurch gekennzeichnet, daß die Abstreifleiste einen Teil der Wand der Flachdüse (24) bildet.

5. Vorrichtung nach einem der Ansprüche 1 bis 4, dadurch gekennzeichnet, daß der Abstand der Absaugevorrichtung (16) von der Benetzungswalze (11) einstellbar ist.

6. Vorrichtung nach einem der Ansprüche 1 bis 5, dadurch gekennzeichnet, daß an jenem Umfangsteil der Benetzungswalze (11), der von der Benetzungsflüssigkeitsaufbringevorrichtung (12) zum zu benetzenden Teigstück (1) führt, ein Verteiler (32) für die Benetzungsflüssigkeit , z.B. eine Bürste, anliegt, der über die zu benetzende Länge der Benetzungswalze (11) durchläuft.

7. Vorrichtung nach einem der Ansprüche 1 bis 6, dadurch gekennzeichnet, daß die Benetzungswalze (11) in an sich bekannter Weise mit einer saugenden Oberfläche, z.B. aus Schaumstoff (27), versehen ist, oder eine aufgerauhte Oberfläche hat, insbesondere in Form einer Längsriffelung (34) oder einer Kreuzriffelung (35).

8. Vorrichtung nach einem der Ansprüche 1 bis 7, dadurch gekennzeichnet, daß unterhalb der Benetzungswalze (11) eine starr gelagerte, zur Drehung angetriebene Gegenwalze (10) als Auflage für das zu benetzende Teigstück (1) liegt.

9. Vorrichtung nach Anspruch 8, dadurch gekennzeichnet, daß die Gegenwalze (10) einen Spalt (9) zwischen zwei Gitterförderbändern (7,8) überbrückt.

10.Vorrichtung nach Anspruch 8 oder 9, dadurch gekennzeichnet, daß der Durchmesser der Gegenwalze (10) 70 bis 130 % des Durchmessers der Benetzungswalze (11) beträgt.

11. Vorrichtung nach einem der Ansprüche 1 bis 10, dadurch gekennzeichnet, daß die Benetzungswalze (11) zusammen mit derAbsaugvorrichtung (16) mittels eines Exzenters (38) höhenverstellbar im Gestell (39) der Vorrichtung gelagert ist, vorzugsweise an im Gestell (39) schwenkbar gelagerten Armen (41).

12. Vorrichtung nach Anspruch 11, dadurch gekennzeichnet, daß die Benetzungswalze (11) an ihren beiden Enden mit Steckbolzen (44,45) in den Armen (41) gelagert ist, wobei einer (45) der Steckbolzen ein auf ihn drehfest, jedochabziehbar aufgesetztes Zahnrad (46) trägt, das in eine Innenverzahnung (47) der Benetzungswalze (11) einschiebbar ist, wobei dieser Steckbolzen (45) mit einem Drehantrieb, z.B. einem Kettentrieb (48,49) für die Drehbewegung der Benetzungswalze (11) verbunden ist.

**Claims**

1. A device for sprinkling pieces of dough with sprinkling material, e.g. poppy or sesame seeds, comprising a transporting device (3) for the pieces of dough (1) with which the pieces of dough (1) are firstly conveyed to a wetting station (4) and then to a sprinkling station (5), wherein in the wetting station (4) a wetting roller (11) moistened with the wetting fluid, particularly water, by a wetting fluid applying device (12), more particularly at least one drip nozzle (13), rolls on the top surface part of the piece of dough (1) and thereby transfers the water on to the piece of dough (1), and in the sprinkling station (5) the piece of dough (1) passes a storage container (18) containing the sprinkling material, from which the sprinkling material is applied to the pieces of dough (1) by a moving sprinkling element, more particularly a rotating sprinkling roller or a brush (19), characterised in that a removal device, in the form of a suction device (16), for excess wetting fluid is disposed on that part of the periphery of the wetting roller (11), driven so as to rotate, which runs from the wetted piece of dough (1) back to the wetting fluid applying device (12).

2. A device according to claim 1, characterised in that the suction device (16) has a flat nozzle (24) connected to a negative pressure source, more particularly a suction fan (21), which extends over at least a major part of the axial length of the wetting roller (11).

3. A device according to claim 1 or 2, characterised in that a wiper (17), more particularly a wiper edge or -roller, adjoining the wetting roller (11) is provided with the suction device (16).

4. A device according to claims 2 and 3, characterised in that the wiper edge forms part of the wall of the flat nozzle (24).

5. A device according to one of claims 1 to 4, characterised in that the spacing of the suction device (16) from the wetting roller (11) is adjustable.

6. A device according to one of claims 1 to 5, characterised in that a distributor (32) for the wetting fluid, e.g. a brush, which passes over the length of the wetting roller (11) to be wetted, adjoins that part of the periphery of the wetting roller (11) which runs from the wetting fluid applying device (12) to the piece of dough (1) to be wetted.

7. A device according to one of claims 1 to 6, characterised in that the wetting roller (11) is provided in a manner known per se with a suction surface, e.g. of foam material (27), or has a roughened surface, particularly in the form of longitudinal grooving (34) or crosswise grooving (35).

8. A device according to one of claims 1 to 7, characterised in that located below the wetting roller (11) is a counter roller (10), rigidly mounted and driven so as to rotate, as a support for the piece of dough (1) which is to be wetted.

9. A device according to claim 8, characterised in that the counter roller (10) bridges a gap (9) between two grid conveyor belts (7, 8).

10. A device according to claim 8 or 9, characterised in that the diameter of the counter roller (10) amounts to 70 to 130 % of the diameter of the wetting roller (11).

11. A device according to one of claims 1 to 10, characterised in that the wetting roller (11) together with the suction device (16) is mounted in the frame (39) of the device so as to be vertically adjustable by means of a cam (38), preferably on arms (41) which are pivotably mounted in the frame (39).

12. A device according to one of claims 1 to 10, characterised in that the two ends of the wetting roller (11) are mounted in the arms (41) with cotter pins (44, 45), one (45) of the cotter pins bearing a toothed wheel (46), mounted thereon so as to be rotationally secured and yet removable, which may be inserted into the internal toothing (47) of the wetting roller (11), this cotter pin (45) being connected to a rotary drive, e.g. a chain drive (48, 49) for the rotational movement of the wetting roller (11).


## Revendications

1. Dispositif de saupoudrage de pâtisseries, par exemple avec des graines de pavot ou de sésame, avec un dispositif de transport (3) pour les pâtisseries (1) par lequel les pâtisseries (1) sont amenées tout d'abord à une station d'humectation (4) et ensuite à une station de saupoudrage (5) ; dans la station d'humectation (4), un rouleau d'humectation (11) humidifié avec le liquide d'humectation, en particulier de l'eau, par un dispositif (12) d'application du liquide d'humectation, en particulier au moins une buse d'écoulement goutte à goutte (13), roule sur la partie superficielle supérieure de la pâtisserie (1) et transfère en même temps de l'eau sur la pâtisserie (1) ; et dans la station de saupoudrage (5), la pâtisserie (1) défile devant une trémie d'alimentation (18) contenant le produit à saupoudrer, trémie d'alimentation à partir de laquelle le produit à saupoudrer est appliqué sur la pâtisserie (1) par un organe mobile de saupoudrage, en particulier un rouleau de saupoudrage tournant ou une brosse (19), dispositif de saupoudrage caractérisé en ce qu'un dispositif d'évacuation, sous la forme d'un dispositif exhausteur (16), est prévu pour le liquide d'humectation excédentaire sur la partie périphérique du rouleau d'humectation (11) commandé en rotation, allant de la pâtisserie humectée (1) au dispositif (12) d'application du liquide d'humectation.

2. Dispositif suivant revendication 1, caractérisé en ce que le dispositif exhausteur (16) est muni d'une buse plate (24) reliée à une source de vide, en particulier à un ventilateur exhausteur (21), cette buse s'étendant sur au moins une grande partie de la longueur axiale du rouleau d'humectation (11).

3. Dispositif suivant revendications 1 ou 2, caractérisé en ce qu'un racleur (17) situé sur le rouleau d'humectation (11), en particulier une lame racleuse ou un rouleau racleur, est prévu sur le dispositif exhausteur (16).

4. Dispositif suivant revendications 2 et 3, caractérisé en ce que la lame racleuse forme une partie de la paroi de la buse plate (24).

5. Dispositif suivant revendications 1 à 4, caractérisé en ce que la distance entre le dispositif exhausteur (16) et le rouleau d'humectation (11) est réglable.

6. Dispositif suivant l'une des revendications 1 à 5, caractérisé en ce qu'un répartiteur (32) de liquide d'humectation, par exemple une brosse, est situé sur la partie périphérique du rouleau d'humectation (11) allant du dispositif (12) d'application du liquide d'humectation à la pâtisserie (1) à humecter, ce répartiteur passant sur la longueur à humecter du rouleau d'humectation (11).

7. Dispositif suivant l'une des revendications 1 à 6, caractérisé en ce que le rouleau d'humectation (11) est muni, d'une manière connue en soi, d'une surface d'imbibition, par exemple en mousse (27), ou bien possède une surface rugueuse, en particulier sous la forme d'un striage dans le sens longitudinal (34) ou d'un moletage (35).

8. Dispositif suivant l'une des revendications 1 à 7, caractérisé en ce qu'un contre-rouleau (10) monté sur un axe fixe, commandé en rotation, est situé au-dessous du rouleau d'humectation (11), ce contre-rouleau servant de support pour la pâtisserie (1) à humecter.

9. Dispositif suivant revendication 8, caractérisé en ce que le contre-rouleau (10) franchit l'espace (9) créé entre deux transporteurs à tapis maillé (7, 8).

10. Dispositif suivant revendications 8 ou 9, caractérisé en ce que le diamètre du contre-rouleau (10) représente 70 à 130 % du diamètre du rouleau d'humectation (11).

11. Dispositif suivant l'une des revendications 1 à 10, caractérisé en ce que le rouleau d'humectation (11) est monté réglable en hauteur au moyen d'un excentrique (38) dans le bâti (39) du dispositif en même temps que le dispositif exhausteur (16), de préférence sur des bras montés pivotants sur le bâti (39).

12. Dispositif suivant revendication 11, caractérisé en ce que le rouleau d'humectation (11) est monté à ses deux extrémités sur des axes (44, 45) traversant les bras (41), l'un (45) des axes supportant un pignon (46) immobilisé en rotation sur l'axe, pignon toutefois débrayable, pouvant coulisser dans une denture intérieure (47) du rouleau d'humectation (11), cet axe (45) étant relié à une commande de rotation, par exemple une transmission par chaîne (48, 49) pour la commande de rotation du rouleau d'humectation (11).

F I G. 1

F I G. 2

F I G. 3

FIG. 4

FIG. 5

FIG. 6

FIG. 7

FIG. 8

EP 0 370 058 B1

FIG. 9

FIG. 10